# EUROPEAN PATENT APPLICATION

(11) **EP 2 778 407 A1**
(43) Date of publication of application: **17.09.2014**
(21) Application number: 11873858.2
(22) Date of filing: 14.10.2011
(51) Int. Cl.: F03G 6/06, F24J 2/04, F24J 2/46, B01D 21/02, B01D 36/04

(54) **FACILITY FOR TREATING THERMAL OILS IN SOLAR THERMAL PLANTS**

(71) Applicant: GD Energy Services, S.A.U., 46015 Valencia (ES)
(72) Inventor: LACALLE BAYO, Jesús, E-46015 Valencia (ES)
(74) Representative: Sanz-Bermell Martinez, Alejandro
(86) International application number: PCT/ES2011/070712
(87) International publication number: WO 2013/053959

(57) **Abstract**

The invention relates to a facility which includes an intake for connecting to an outlet circuit of the solar thermal plant; an oil-cooling device; a first decanting tank (4); a second decanting tank (7); a third tank (8), which serves as a flow-control tank, receiving oil that has been treated before said oil is fed back into the plant; a filtering unit (12) placed downstream of the second tank (7) and upstream of the third tank (8); a set of control valves; and a set of inspection pressure gauges, thermometers and flowmeters placed at various points of the facility.

## Description

This invention refers to an installation for processing thermal oils at thermal solar plants, in which the oil can be continuously processed with no need for the plant to halt its operations.

Solar thermal plants comprise conduits which take in the radiation from solar collectors and which are normally connected to main conduits in which the oil is taken to a heat exchanger from a vapour installation, for example; after losing its heat in the exchanger this is reincorporated in the thermal collection circuit or taken to a storage tank.

The nature of the thermal oils used in these installations means that these are extremely corrosive and in spite of the materials used being anti-corrosive, in actual fact this causes the deterioration of some of the elements, which has mainly two effects:
o A first effect is the contamination of the oil, either by solid particles from the components of the installation or through other fluid components, such as water from the vapour installation);
o The oil contaminated with solid particles increases the degree of erosion in the oil circulation circuit, and this could be critical in components such as the discharge pumps or heat exchangers, in which the entire flow is split into small conduits;
o Oil contaminated with water has different consequences:
   ■ One of these is that boiling is caused at a relatively low temperature when heated by the solar collectors; given that the volume taken up by the vapour is not occupied by thermal oil, and that the specific heat of the thermal oil is much greater than that of water vapour, there is a significant drop in energy yield;
   ■ Another consequence is that the pressure inside the conduits increases considerably, an unwanted effect which means that there is a greater risk of breakages in the installation, or that this needs to be dimensioned to withstand these high pressures, with the resulting excess cost.

### State of the art

At present, when the thermal oil in a thermal solar installation is found to be contaminated, the installation has to be stopped and all the oil withdrawn, to be sent to the manufacturer for regeneration or managed as waste. In either of these two cases the costs arising are very high.

Apart from the ordinary maintenance costs for the installation, this means a problem through entailing the stoppage of the plant, which generates significant economic losses through not producing energy. The processing of the oil furthermore takes place in plants located at some distance from the thermal solar plant, meaning that the contaminated or refill oil has to be transported in tanks, also increasing the transport costs.

At the high temperatures which this reaches, this oil means a high risk of fire, for which reason the transfer has to be carried out with all kinds of precautions and using special safety transport.

The author is unaware of any other specific solutions for on-site processing of the oil from the thermal solar plant.

### Description of the invention

This invention describes an installation for processing thermal oils at thermal solar plants, which comprises:
o A connection socket with an outlet circuit from the thermal solar plant;
o An oil-cooling device (air cooler). This cooling device comprises a plurality of cooling elements arranged in series and/or in parallel, each of the said cooling elements comprising a heat exchanger and a blast ventilation device;
o A first settling tank;
o A second tank in which a second settling operation is performed;
o A third tank, which acts as a flow regulator tank, receiving oil that has previously been processed prior to its reincorporation in the plant; according to the embodiment proposed the third tank will normally be placed back-on to the second tank, and the oil already processed and filtered is received in this third tank, prior to its reinsertion in the thermal solar tank or loading on a tanker truck;
o A filtration assembly provided with different lines set in parallel, each of these formed of at least one stage, and preferably with more than one of these being provided with decreasing pitch cartridge filters;
o Outlets of oily waters coming from the settling operation in the ta n ks;
o Oil discharge pumps;
o At least one return line to the oil tanks of the thermal solar plant;
o At least one outlet line for taking samples;
o At least one outlet line for loading a tanker truck;
o At least one oil inlet line for tankers or some other source for processing;
o A set of control valves, and
o A set of manometers, thermometers and control flow meters placed at different points in the installation.

### Description of the drawings

In order to illustrate the following explanation, we are enclosing a sheet of drawings with this descriptive report, in which a single sheet represents the essence of this invention, and in which it shows a diagram of the installation for processing thermal oils at thermal solar plants according to the invention.

### Description of the preferential embodiment

As has been stated, the invention describes an installation whose purpose is to carry out processing and purification of the thermal oil at a thermal solar plant.

The oil from the plant is at a fairly high temperature, which makes it difficult to process. Hence the installation being proposed comprises an inlet manifold (1) connected to the circuits or the oil tanks of the thermal solar plant. Due to the high pressures at which the oil is kept in the thermal solar plant, up to 20 bar, there are pressure reducers in this manifold, for lowering this to 2-6 bar, so that the safety conditions in the different items are the ones matching these pressures and not the pressure at the connection to the plant.

The following stage of the installation is made up of an air cooler (2). The air cooler (2) consists of a set of several cooling units (28) which comprise a heat exchanger and a fan. The inlet temperature to the installation of the invention can be between the maximum operating temperature, around 400°C, and the operating temperature of some systems, around 250°C. The processing temperature is about 50-80°C. Hence, the number of cooling units (28) that will be running will be determined depending on the inlet-outlet temperatures, as well as the ambient temperature. There is also a possibility of the fans having a variable speed, which will in turn modify the air flow and the cooling capacity. The cooling units could be connected in series, in parallel or in a combined system, with at least two lines in parallel provided with more than one unit in series.

After verifying that the temperature is ideal for the treatment, the corresponding shut-off valves will be open, with the thermal oil being taken through the conduit (3) to a first tank (4). The first tank (4) is at atmospheric pressure.

An outlet (24) for taking samples is designed prior to processing, and an outlet (25) for external discharge, such as to a tanker truck.

The aforementioned first tank (4) has a set of inlet connections and a set of outlet connections. The first of the inlets comes from the conduit (3), which in turn comes from the air cooler (2). There is another inlet (19) which can come from different sources, such as for example:
o A return line from a second tank (7); the return line may be used for example, through detecting excess water in the resulting oil, or for flow regulation;
o A connection with a line (18) for discharging from an external source, such as a tanker truck.

The main discharge of the first tank (4) takes place by means of a line (21), which comprises a discharge pump (6), and which leads this to the second tank (7). In spite of this other outlets (20,22) are designed for maintenance drainage and as outlets for external collection of the settled floating oily waters, for example by means of a tanker truck.

Through a conduit (5), the discharge pump (6) leads the oil that has already been subjected to a first settling process and from which a certain amount of oily water has been extracted, to the second tank (7).

The entry of oil to the first tank (4) is allowed by means of a conduit leading to a zone protected, for example, by means of a grille or perforated plate wall, which prevents the formation of turbulence inside this tank.

The tanks are also preferably divided into sections by means of walls that are also made of grilles or perforated plates.

Since the oils used for these purposes are heavier than water, the water floats on the oil, meaning that the collection has to be performed from the top. For this reason floats are designed with absorption intakes which collect the liquid found at the surface. The oil outlet thus takes place from the bottom of the tank, meaning that the water separation is extremely efficient. The first settling tank (4) and the second settling tank (7) furthermore comprise a visor (a transparent window), through which the level of oil and water can be seen, which allows running or stopping the extraction system, or opening or closing the relevant valves. The process can nevertheless be automated by means of the corresponding detectors on the different levels.

The oil from the first tank (4) goes, as already stated, to the second tank (7), in which a second settling process is performed, and in which the oil is again extracted at the bottom and the water at the top through an oily water outlet (23). The characteristics of the second tank (7) are essentially the same as those of the first tank (4).

The second tank comprises an outlet conduit (9) provided with a pump (10), which takes the oil to an inlet line (11) to a filtration assembly (12). The filtration assembly (12) comprises one or more sets of filters (13) with a decreasing mesh size arranged in series. The sets of filters are placed in parallel with each other, and the number of sets will depend on the flow required. Each filter (13) is isolated by means of valves and comprises at least one manometer which enables learning its condition for replacing this if necessary.

The oil from the filtration assembly (12) is taken by means of a line (14) to a third tank (8), from which this is led on to an outlet line (15). The outlet line (15) comprises a pump (29) which should provide at least the rated pressure of the installation to which the oil is reincorporated. This pump takes the oil to a line (16) for connection to an inlet manifold (17) and for return to the thermal solar plant.

By opening and closing the proper valves, the outlet line (15) takes the oil by means of the pump (29), either to an outlet for taking samples (26) or to an outer discharge outlet (27), for example for a tanker truck.

The installation comprises a set of control valves and a set of manometers, thermometers and control flow meters placed at different points in the installation.

The installation is dimensioned in such a way that this is arranged in three standard 20-foot containers: A first container houses the air cooler and possible the filtration assembly; a second container will house the first tank, and a third container will house the second and third tanks. The pumping systems may be placed in the first container or be located in the different containers, as may prove most convenient. During transport the inside of the containers is used to house the different conduits for connection between the items. This comprises retention trays for fitting the different items.

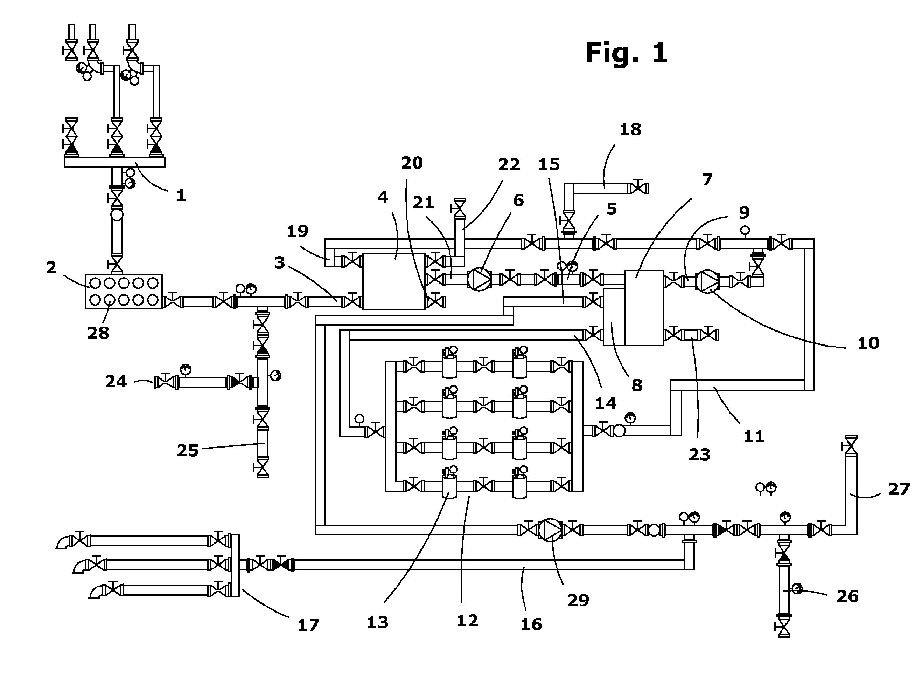

## Claims

1. An installation for processing thermal oils at thermal solar plants, **characterised in that** this comprises:
o At least one connection with an outlet circuit from the thermal solar plant;
o At least one oil-cooling device;
o A first settling tank (4) which takes in the oil from the cooling device;
o a second settling tank (7) in which a second settling operation is performed;
o A third tank (8), which acts as a flow regulating tank, which receives oil already processed prior to its reincorporation in the plant;
o A filtration assembly (12) arranged after the second tank (7) and before the third tank (8)
o A set of control valves and
o A set of manometers, thermometers and control flow meters placed at different points in the installation.

2. An installation, according to claim 1, **characterised in that** the oil-cooling device is made up of an air cooler (2) consisting of a set of cooling units (28) arranged in series, in parallel or a combination of both.

3. An installation, according to claim 1, **characterised in that** the cooling units (28) consist of a fan and a heat exchanger towards which the fan sends the air.

4. An installation, according to any of the previous claims, **characterised in that** the first tank (4) and/or the second tank (7) comprise at least one zone protected by means of a grille or perforated plate wall into which the oil to be processed is sent.

5. An installation, according to any of the previous claims, **characterised in that** the first tank (4) and/or the second tank (7) are split into sections by means of walls made of grilles or perforated plates.

6. An installation, according to any of the previous claims, **characterised in that** the first tank and/or the second tank comprise at least one float fitted with absorption intakes, which collect the oily water found on the surface as well as absorption outlets for the oil in a lower zone.

7. An installation, according to any of the previous claims, **characterised in that** the first and/or the second tank comprise at least one visor or transparent window through which the oil and water level can be observed.

8. An installation, according to any of the previous claims, **characterised in that** the second tank and the third tank are joined with each other.

9. An installation, according to any of the previous claims, **characterised in that** the filtration assembly (13) consists of one or more lines arranged in parallel, each of these being formed of at least one and preferably more than one stage provided with decreasing pitch cartridge filters.

10. An installation, according to any of the previous claims, **characterised in that** a pump is fitted after each of the first, second and third tanks.

11. An installation, according to any of the previous claims, **characterised in that** this comprises a return line from the second tank to the first tank.

12. An installation, according to any of the previous claims, **characterised in that** this also comprises outlets for taking samples and for loading tanker trucks.

13. An installation, according to any of the previous claims, **characterised in that** this comprises at least one intake for oil from an external supply, such as a tanker truck.

14. An installation, according to any of the previous claims, **characterised in that** the different items which form this are included in three 20-foot containers, in the following way:
o A first container houses the air cooler and possibly the filtration assembly;
o A second container houses the first tank (4); and
o A third container will house the second (7) and third (8) tanks; using the tanks as a housing for the conduits connecting the items.
